# EUROPEAN PATENT SPECIFICATION

(11) **EP 3 193 058 B1**
(45) Date of publication and mention of the grant of the patent: **26.09.2018**
(21) Application number: 16151408.8
(22) Date of filing: 15.01.2016
(51) Int. Cl.: F16K 37/00, F16K 43/00, F16K 1/52, F24D 19/10, G05D 23/02, F16K 27/02

(54) **VALVE**
VENTIL
VANNE

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- EP-A2- 1 193 432
- DE-U1- 8 517 863
- DE-U1- 9 113 745
- JP-A- H01 299 376
- US-A1- 2010 307 611

## Description

The invention relates to a valve comprising a valve housing, an insert, a valve seat, a valve element, a first port and a second port, a flow passage between said first port and said second port, wherein the insert can be rotated to reverse the flow direction through the flow passage.

Valves of the above kind in the state of the art do not contain a means of adjusting the maximum flow through the valve. Such a valve is, for example, known from EP 1 193 432 A2. Therein an insert comprising the valve seat is rotatably arranged in the valve housing. The flow direction through the valve can be reversed by rotating an adjustment element.

DE 91 13 745 describes a valve conversion kit for a thermostatically controlled radiator valve. The kit comprises an insert which can be screwed into a valve housing. The insert can be mounted in different directions to adapt the conversion kit to the flow direction of the heating fluid through the valve housing.

JP H01299376 A describes a lens-shaped valve having a valve casing and an auxiliary valve body mounted in the valve casing. The auxiliary valve body can be rotated by 90° in the valve casing in order to completely close a passage from an inlet to an outlet.

On the other hand there are valves known in the state of the art that allow a presetting of the maximum flow through the valve. Such valves are however not reversible. DE 33 00 624 A1 shows a valve containing a presetting mechanism for changing the maximum fluid flow through the valve. The presetting is changed by rotating a presetting element, whereby the overlap of the housing and a control orifice with a variable height can be changed. This in turn changes the effective maximum flow cross section through the valve when the valve is fully open.

DE 100 22 730 A1 shows a further valve with a presetting mechanism. Therein the presetting can be adjusted by rotating a presetting handle. Thereby the maximum distance between a valve element and the valve seat can be adjusted to change the maximum effective flow cross section through the valve.

US 2010/0307611 A1 describes a distribution valve with integrated flow metering unit. This valve comprises a valve seat and a valve element moveable in relation thereto. One section of the valve element is held and guided in an attachment element which is arranged externally against an opening in the pipe. This section of the valve element has a handle wherein a stroke limiter limiting the axial displacement of the sealing part is located.

DE 85 17 863 U1 shows a thermostat head for radiator valves having a temperature expendable actuation element. This element can be displaced in a housing in order to preset the valve.

It is therefore a task of the invention to provide a valve that has a better functionality.

According to the present invention the above task is solved in a valve mentioned at the outset in that the valve comprises a presetting element, that is adjustable to change the maximum flow through the valve.

Consequently, a valve is provided which both has the feature of a reversal of flow direction and also allows to adjust the maximum flow through the valve by a presetting element. Preferably the presetting function and the flow reversal function are controllable independently from one another. A preferred embodiment of such a valve is a heat exchanger valve, in particular a radiator valve. The maximum fluid flow through the valve is pressure dependent. Consequently, adjusting the maximum fluid flow can be understood as adjusting the maximum effective flow cross section through the valve.

In a preferred embodiment the presetting element is rotated with the insert when the flow direction is reversed, such that the presetting is not changed. In this embodiment it is ensured that once a presetting is chosen for the valve and the valve flow direction is to be changed later on the chosen presetting will not be changed or lost. This increases the possible applications for the valve and also simplifies the maintenance of the valve and the heating or cooling circuit to which the valve may be connected.

In a further preferred embodiment the presetting is adjusted by rotating the presetting element relative to the insert. This way one may change the maximum flow through the valve. The presetting element may comprise to this end a cut-out of variable height in the circumferential direction. The presetting element may for example be rotated relative to the housing as well as to the insert to change the maximum flow through the valve. The presetting element to this end may comprise a presetting handle that can be manually rotated.

In a further preferred embodiment the presetting is adjusted by changing the maximum distance of the valve element to the valve seat. In this embodiment the valve seat again may be arranged in the insert or be connected to the insert. The maximum distance of the valve element from the insert may be changed by adjusting the maximum distance between the presetting element from the insert. The valve element may be connected to the presetting element by a spindle.

In a further preferred embodiment the valve comprises a handle, that in a first axial position can be rotated with the insert to reverse the flow through the valve, and in a second axial position blocks the rotation of the insert. Preferably the handle is a locking ring. The handle allows to rotate the insert to reverse the flow through the valve when the handle is in a first axial position. However, when the handle is in a second axial position a rotation of the insert is blocked.

In a further preferred embodiment the housing comprises at least two cut-outs in a circumferential direction, which the handle engages in, when the handle is in the second axial position. Such cut-outs allow to ensure that the handle and consequently the insert cannot be rotated when the handle is in the second axial position and engages in the cut-outs.

It is furthermore preferred if the handle comprises at least one finger, that protrudes in a radial direction, and engages in the housing, when the handle is in the second axial position. Preferably the handle comprises two fingers. It is furthermore preferred if the finger or the fingers engage into the cut-outs of the housing in the second axial position of the handle.

In a further preferred embodiment the insert is connected to at least one recess, which the handle engages in, when the handle is in the first axial position such that rotating the handle also rotates the insert. Preferably, the recess is arranged either in the insert or in a part of the valve which is rotationally coupled to the insert. The at least one recess may for example be arranged in a valve top.

It is furthermore preferred if the valve comprises a valve top, wherein the valve top is rotationally fixed to the insert. This is a relatively simple solution to ensure that the insert is rotated by having the handle engage into the valve top to reverse the flow direction. The presetting element is preferably arranged coaxially inside the valve top.

It is furthermore preferred if the valve top is rotatably connected to the housing and holds the presetting element in the housing. This way one may install the valve top, the presetting element as well as the insert in one assembly step by simply rotatably connecting the valve top to the housing. The rotatable connection between the valve top and the housing may, for example, be facilitated by a snap-in connection. Alternatively, the rotatable connection between the housing and the valve top can also be facilitated by a spring ring. The spring ring can hold the valve top in the housing while ensuring that the valve top may be rotated relative to the housing.

A further preferred embodiment the insert, the valve top and the presetting element are all rotated with the handle when the flow direction is reversed. In this embodiment it is ensured that any presetting chosen by rotating the presetting element relative to the insert and/or the valve top is saved when the flow direction of the valve is reversed.

In a further preferred embodiment the handle can only be displaced into the second axial position in two discrete rotational positions that correspond to one of the flow directions each. This way it is ensured that the handle can only be put into a second axial position when the insert has been rotated in one of the two possible rotational positions and is not left in an intermediate position.

In a further preferred embodiment the handle comprises at least one flow indicator to indicate the chosen flow direction through the valve. This embodiment is in particular preferable if the handle is a locking ring such that it is easily visible to an outside which flow direction through the valve is currently chosen. The flow indicator can for example be in the shape of an arrow. The flow indicator can for example be arranged on a finger of the handle or on a radial outside of the handle.

It is furthermore preferred if the valve comprises at least one presetting indicator. Preferably the presetting indicator is arranged in the valve top or the housing neighboring the presetting element. This way a relative rotation of the presetting element to the valve top and/or the housing can be indicated by the presetting indicator. The presetting element to this end may comprise numbers or other means of indicating the different presettings.

Preferred embodiments of the invention will now be described with reference to the figures, wherein:
- Fig. 1: shows a cut view of a valve according to the invention with the handle in a second axial position,
- Fig. 2: shows another cut view of the same valve as fig. 1 with the handle in the first axial position,
- Fig. 3 and 5: show the same valve as fig. 1 and 2 with the handle in the second axial position,
- Fig. 4 and 6: show the same valve as fig. 1 to 3 and 5 with the handle in the first axial position,
- Fig. 7: shows the valve according to fig. 1 to 6 without the handle attached to the housing,
- Fig. 8: shows a handle of a valve according to the invention.

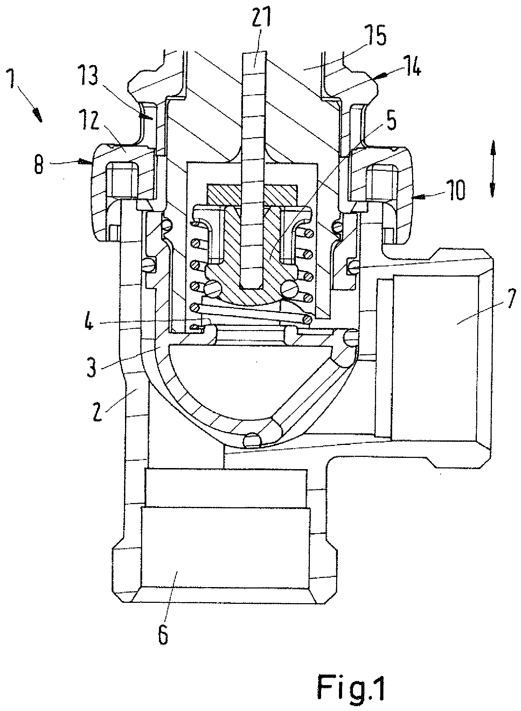

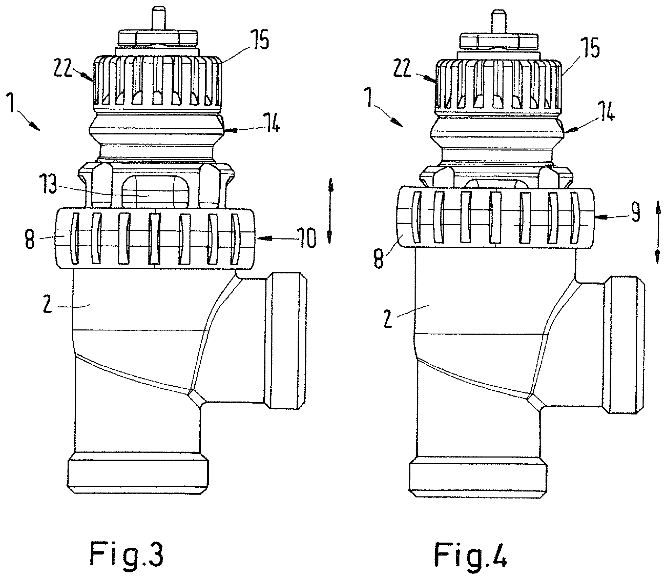

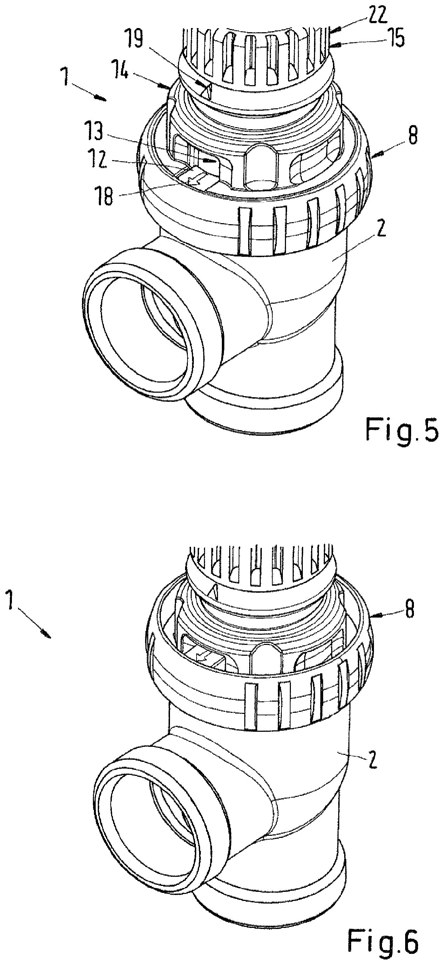

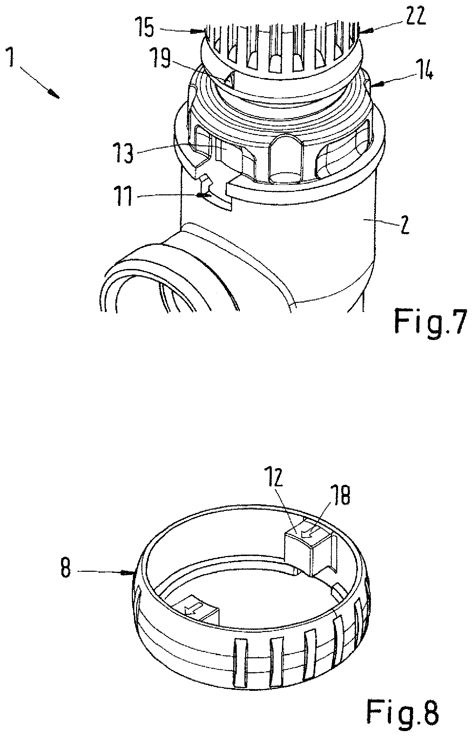

Fig. 1 to 8 show the same embodiment of a valve according to the invention or in case of fig. 7 and 8 parts of the valve.

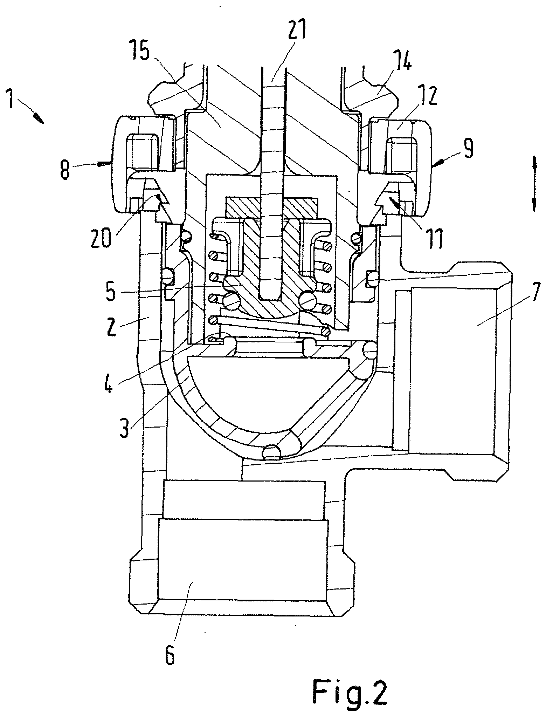

Fig. 1 and 2 show cut views of the valve 1 comprising a housing 2 as well as an insert 3. In the insert 3 a valve seat 4 is arranged which can be engaged by a valve element 5 to stop the fluid flow through the valve 1. In the housing 2 a first fluid port 6 as well as a second fluid port 7 are arranged. The insert 3 can in this embodiment be rotated by 180° around a closing axis of the valve to reverse the flow direction through the valve 1. "Axial" in the context of this application denotes the direction parallel to the closing direction of the valve element towards the valve seat. In the shown rotational position of the insert 3 the first fluid port 6 is the outlet and the second fluid port 7 is the inlet.
The insert 3 is rotationally coupled to a valve top 14 which is only partially shown in fig. 1 and 2. The valve top 14 can for example be connected to the insert 3 by a snap-in connection. As can be seen in fig. 2 the valve top 14 is connected to the housing 2 by a snap-in connection 20. The valve top 14 can be rotated relative to the housing 2 when a handle 8 is in a first axial position 9 as shown in fig. 2, 4 and 6. If the handle however is placed in a second axial position 10 the handle 8 as well as the valve top 14 and the insert 3 cannot be rotated to reverse the flow direction. The second axial position 10 of the handle 8 is shown in fig. 1, 3 and 5.
The handle 8 comprises fingers 12, that protrude in a radial direction and engage in the housing 2, when the handle 8 is in the second axial position 10 as seen for example in fig. 1. The fingers 12 in this case engage into cut-outs 11 of the housing 2 whereby a rotation of the handle 8 as well as of the valve top or the insert 3 is blocked. The fingers 12 to this end not only abut the housing 2 in a rotational direction in the second axial position 10 but also abut the valve top 14 in a tangential direction. The fingers 12 to this end have a larger axial extension than the cut-outs 11.
In the first axial position 9 as seen is fig. 2, 4 and 6 the handle 8, and preferably the fingers 12, engage into recesses 13 of the valve top 14.

Referring to fig. 2 to 6, the valve 1 also comprises a presetting element 15 which is in this embodiment partially embedded in the valve top 14 as well as in the insert 3. Coaxially with the presetting element 15 a spindle 21 is arranged. The valve element 5 is connected to one axial end of the spindle 21. In this embodiment the presetting element 15 comprises a presetting handle 22. Preferably, the presetting handle 22 has the shape of a ring.

In this embodiment the presetting of the valve 1 can be changed by rotating the presetting handle 22 when the handle 8 is in the second axial position. In the second axial position 10 of the handle 8 a rotation of the valve top 14 as well as the insert 3 relative to the housing 2 is blocked. Consequently, if one applies a torque to the presetting handle 22 the presetting element 15 will be rotated to change the presetting. By a change of presetting in the context of this application a change in the maximum fluid flow through the valve is denoted. This may be achieved by changing the effective flow cross-section from one of the fluid ports 6, 7 through an orifice to the valve seat 4 as in the given embodiment. Alternatively, the maximum distance between the valve element 5 and the valve seat 4 may be adjusted. The larger the maximum distance between the valve element 5 and the valve seat 4 is chosen, the higher is the maximum flow through the valve 1.

In an alternative embodiment the presetting may be adjusted by axially displacing the presetting element relative to the insert.

In fig. 7 and 8 the handle 8 is shown separated from the valve 1. In this case one may more clearly identify the cut-outs 11 in the housing 2. Furthermore, one can see one of the recesses 13 into which the fingers 12 of the handle 8 can engage in the first axial position 9. Moreover, in fig. 8 one can see that the handle 8 comprises a flow indicator 18 for indicating the flow direction in the shape of an arrow. The flow indicator 18 preferably is arranged on an axial face of the fingers 12 but it can also be arranged on a radial outside of the handle 8. One can also see in fig. 8 that the handle 8 here has the shape of a ring handle with fingers 12 protruding radially inwards. However, the handle 8 can also have a different geometry.

In this embodiment the housing 2 comprises two cut-outs 11 which are arranged on opposite sides of the housing, i.e. in a 180° angular distance. Similarly the handle 8 comprises two fingers 12 which are also arranged in a 180° angular distance from one another. This ensures that the handle 8 can only be locked into a first axial position in two possible rotational positions. Consequently, it is not possible to leave the valve in an intermediate position where the insert 3 is not fully rotated from one flow direction to the other. Thus the problem of previous reversible valves which could in some cases be left in intermediate rotational position of the insert has been solved with the valve according to the present invention.

The valve 1 has the further advantage that a chosen presetting of the valve 1 is saved when the flow direction through the valve 1 is reversed. This is achieved by the presetting element 15, the valve top 14 as well as the insert 3 all being rotated together with the handle 8 when the flow direction is being reversed. Consequently a chosen rotational position of the presetting element 15 relative to the valve top 14 is not changed when the flow direction is reversed.

In fig. 7 one can furthermore see that the valve 1 comprises a presetting indicator 19. Here the presetting indicator 19 is arranged on the valve top 14 in close vicinity to the presetting element 15. The presetting element 15 can for example comprise numbers or other measures of the presetting which can be compared relative to the presetting indicator 19.

When the handle 8 is in the first axial position it is not possible to attach a valve attachment like a thermostatic actuator to the valve. This may be facilitated by the handle partially covering a connection geometry for connecting the valve attachment to the valve when the handle is in the first axial position. This ensures that the valve is not left in an intermediate rotational position of the insert and that a valve attachment can only be attached when the valve is in one of the final rotational positions with a clear defined flow direction.

## Claims

1. A valve (1) comprising a valve housing (2), an insert (3), a valve seat (4), a valve element (5), a first fluid passage (6) and a second fluid passage (7), wherein the insert (3) can be rotated to reverse the flow direction from the first fluid passage (6) through the valve seat (4) to the second fluid passage (7), **characterized in that** the valve (1) comprises a presetting element (15) that is adjustable to change the maximum flow through the valve (1).

2. The valve (1) according to claim 1, **characterized in that** the presetting element (15) is rotated with the insert (3) when the flow direction is reversed, such that the presetting is not changed.

3. The valve (1) according to claims 1 or 2, **characterized in that** the presetting is adjusted by rotating the presetting element (15) relative to the insert (3).

4. The valve (1) according to any of the claims 1 to 3, **characterized in that** the presetting is adjusted by changing the maximum distance of the valve element (5) to the valve seat (4).

5. The valve (1) according to any of claims 1 to 4, **characterized in that** the valve (1) comprises a handle (8), that in a first axial position (9) can be rotated with the insert (3) to reverse the flow through the valve (1), and in a second axial position (10) blocks a rotation of the insert (3).

6. The valve (1) according to claim 5, **characterized in that** the housing (2) comprises at least two cut-outs (11) in a circumferential direction, which the handle (8) engages in, when the handle (8) is in the second axial position (10).

7. The valve (1) according to claims 5 or 6, **characterized in that** the handle (8) comprises at least one finger (12), that protrudes in a radial direction and engages in the housing (2), when the handle (8) is in the second axial position (10).

8. The valve (1) according to any of claims 5 to 7, **characterized in that** the insert (3) is connected to at least one recess (13), which the handle (8) engages in when the handle (8) is in the first axial position (9) such that rotating the handle (8) also rotates the insert (3).

9. The valve (1) according to any of claims 1 to 8, **characterized in that** the valve (1) comprises a valve top (14), wherein the valve top (14) is rotationally fixed to the insert (3).

10. The valve (1) according to claim 9, **characterized in that** the valve top (14) is rotatably connected to the housing (2) and holds the presetting element (15) in the housing (2).

11. The valve (1) according to claim 9 or 10 in their dependency on any of claims 5-8, **characterized in that** the insert (3), the valve top (14) and the presetting element (15) are all rotated with the handle (8) when the flow direction is reversed.

12. The valve (1) according to any of claims 5 to 11, **characterized in that** the handle (8) can only be displaced into the second axial position (10) in two discrete rotational positions that correspond to one of the flow directions each.

13. The valve (1) according to any of claims 5 to 12, **characterized in that** the handle (8) comprises at least one flow indicator (18) to indicate the chosen flow direction through the valve (1).

14. The valve according to any of claims 1 to 13, **characterized in that** the valve (1) comprises at least one presetting indicator (19).

## Patentansprüche

1. Ventil (1), aufweisend ein Ventilgehäuse (2), einen Einsatz (3), einen Ventilsitz (4), ein Ventilelement (5), einen ersten Fluiddurchgang (6) und einen zweiten Fluiddurchgang (7), wobei der Einsatz (3) zum Umkehren der Strömungsrichtung vom ersten Fluiddurchgang (6) durch den Ventilsitz (4) zum zweiten Fluiddurchgang (7) gedreht werden kann, **dadurch gekennzeichnet, dass** das Ventil (1) ein Voreinstellungselement (15) aufweist, das zum Ändern der Maximalströmung durch das Ventil (1) anpassbar ist.

2. Ventil (1) nach Anspruch 1, **dadurch gekennzeichnet, dass** das Voreinstellungselement (15) mit dem Einsatz (3) gedreht wird, wenn die Strömungsrichtung umgekehrt wird, sodass die Voreinstellung nicht geändert wird.

3. Ventil (1) nach einem der Ansprüche 1 oder 2, **dadurch gekennzeichnet, dass** die Voreinstellung durch Drehen des Voreinstellungselements (15) bezüglich des Einsatzes (3) gedreht wird.

4. Ventil (1) nach einem der Ansprüche 1 bis 3, **dadurch gekennzeichnet, dass** die Voreinstellung durch Ändern des Maximalabstands des Ventilelements (5) zum Ventilsitz (4) angepasst wird.

5. Ventil (1) nach einem der Ansprüche 1 bis 4, **dadurch gekennzeichnet, dass** das Ventil (1) einen Griff (8) aufweist, der in einer ersten axialen Position (9) zum Umkehren der Strömung durch das Ventil (1) mit dem Einsatz (3) gedreht werden kann und in einer zweiten axialen Position (10) eine Drehung des Einsatzes (3) blockiert.

6. Ventil (1) nach Anspruch 5, **dadurch gekennzeichnet, dass** das Gehäuse (2) zwei Ausschnitte (11) in einer Umfangsrichtung aufweist, in die der Griff (8) eingreift, wenn der Griff (8) in der zweiten axialen Position (10) ist.

7. Ventil (1) nach einem der Ansprüche 5 oder 6, **dadurch gekennzeichnet, dass** der Griff (8) mindestens einen Finger (12) aufweist, der in einer radialen Richtung vorsteht und in das Gehäuse (2) eingreift, wenn der Griff (8) in der zweiten axialen Position (10) ist.

8. Ventil (1) nach einem der Ansprüche 5 bis 7, **dadurch gekennzeichnet, dass** der Einsatz (3) mit mindestens einer Aussparung (13) verbunden ist, in die der Griff (8) eingreift, wenn der Griff (8) in der ersten axialen Position (9) ist, sodass das Drehen des Griffs (8) außerdem den Einsatz (3) dreht.

9. Ventil (1) nach einem der Ansprüche 1 bis 8, **dadurch gekennzeichnet, dass** das Ventil (1) eine Ventiloberseite (14) aufweist, wobei die Ventiloberseite (14) drehbar am Einsatz (3) befestigt ist.

10. Ventil (1) nach Anspruch 9, **dadurch gekennzeichnet, dass** die Ventiloberseite (14) drehbar mit dem Gehäuse (2) verbunden ist und das Voreinstellungselement (15) im Gehäuse (2) hält.

11. Ventil (1) nach einem der Ansprüche 9 oder 10 in ihrer Abhängigkeit von einem der Ansprüche 5 bis 8, **dadurch gekennzeichnet, dass** der Einsatz (3), die Ventiloberseite (14) und das Voreinstellungselement (15) alle mit dem Griff (8) gedreht werden, wenn die Strömungsrichtung umgekehrt wird.

12. Ventil (1) nach einem der Ansprüche 5 bis 11, **dadurch gekennzeichnet, dass** der Griff (8) nur in zwei diskreten Positionen in die zweite axiale Position (10) verschoben werden kann, welche jede einer der Strömungsrichtungen entsprechen.

13. Ventil (1) nach einem der Ansprüche 5 bis 12, **dadurch gekennzeichnet, dass** der Griff (8) mindestens einen Strömungsanzeiger (18) zum Anzeigen der gewählten Strömungsrichtung durch das Ventil (1) aufweist.

14. Ventil nach einem der Ansprüche 1 bis 13, **dadurch gekennzeichnet, dass** das Ventil (1) mindestens einen Voreinstellungsanzeiger (19) aufweist.

## Revendications

1. Vanne (1) comprenant un boîtier de vanne (2), un insert (3), un siège de vanne (4), un élément de vanne (5), un premier passage de fluide (6) et un second passage de fluide (7), dans laquelle l'insert (3) peut être tourné pour inverser la direction d'écoulement du premier passage de fluide (6) à travers le siège de vanne (4) au second passage de fluide (7), **caractérisée en ce que** la vanne (1) comprend un élément de préréglage (15) qui est réglable pour changer l'écoulement maximum à travers la vanne (1).

2. Vanne (1) selon la revendication 1, **caractérisée en ce que** l'élément de préréglage (15) est tourné avec l'insert (3) lorsque le sens d'écoulement est inversé, de sorte que le préréglage n'est pas modifié.

3. Vanne (1) selon les revendications 1 ou 2, **caractérisée en ce que** le préréglage est ajusté par rotation de l'élément de préréglage (15) par rapport à l'insert (3).

4. Vanne (1) selon l'une quelconque des revendications 1 à 3, **caractérisée en ce que** le préréglage est ajusté en modifiant la distance maximale de l'élément de vanne (5) par rapport au siège de vanne (4) .

5. Vanne (1) selon l'une quelconque des revendications 1 à 4, **caractérisée en ce que** la vanne (1) comprend une poignée (8), qui dans une première position axiale (9) peut être tournée avec l'insert (3) pour inverser l'écoulement à travers la vanne (1), et dans une seconde position axiale (10) bloque une rotation de l'insert (3).

6. Vanne (1) selon la revendication 5, **caractérisée en ce que** le boîtier (2) comprend au moins deux découpes (11) dans une direction circonférentielle, dans lesquelles s'engage la poignée (8), lorsque la poignée (8) est dans la seconde position axiale (10).

7. Vanne (1) selon la revendication 5 ou 6, **caractérisée en ce que** la poignée (8) comprend au moins un doigt (12) qui dépasse dans une direction radiale et s'engage dans le boîtier (2), lorsque la poignée (8) est dans la seconde position axiale (10).

8. Vanne (1) selon l'une quelconque des revendications 5 à 7, **caractérisée en ce que** l'insert (3) est relié à au moins un évidement (13) dans lequel la poignée (8) s'engage lorsque la poignée (8) est dans la première position axiale (9) de telle sorte que la rotation de la poignée (8) fait également tourner l'insert (3).

9. Vanne (1) selon l'une quelconque des revendications 1 à 8, **caractérisée en ce que** la vanne (1) comprend un sommet de vanne (14), le sommet de vanne (14) étant fixé en rotation sur l'insert (3).

10. Vanne (1) selon la revendication 9, **caractérisée en ce que** le sommet de vanne (14) est relié de manière rotative au boîtier (2) et maintient l'élément de préréglage (15) dans le boîtier (2).

11. Vanne (1) selon la revendication 9 ou 10 lorsqu'elles dépendent de l'une quelconque des revendications 5 à 8, **caractérisée en ce que** l'insert (3), le sommet de vanne (14) et l'élément de préréglage (15) sont tous tournés avec la poignée (8) lorsque le sens d'écoulement est inversé.

12. Vanne (1) selon l'une quelconque des revendications 5 à 11, **caractérisée en ce que** la poignée (8) ne peut être déplacée dans la seconde position axiale (10) que dans deux positions de rotation discrètes correspondant chacune à l'une des directions d'écoulement.

13. Vanne (1) selon l'une quelconque des revendications 5 à 12, **caractérisée en ce que** la poignée (8) comprend au moins un indicateur de débit (18) pour indiquer la direction d'écoulement choisie à travers la vanne (1).

14. Vanne selon l'une quelconque des revendications 1 à 13, **caractérisée en ce que** la vanne (1) comprend au moins un indicateur de préréglage (19).
